Europäisches Patentamt

European Patent Office

Office européen des brevets

(11) Veröffentlichungsnummer: **0 229 836**
**B1**

(12) **EUROPÄISCHE PATENTSCHRIFT**

(45) Veröffentlichungstag der Patentschrift:
24.05.89

(51) Int. Cl.⁴: **B 23 B 29/034**

(21) Anmeldenummer: 86905197.9

(22) Anmeldetag: 23.08.86

(86) Internationale Anmeldenummer:
PCT/DE 86/00339

(87) Internationale Veröffentlichungsnummer:
WO 87/01319 (12.03.87 Gazette 87/6)

(54) WERKZEUG FÜR SPANABHEBENDE BEARBEITUNG.

(30) Priorität: 28.08.85 DE 3530696

(43) Veröffentlichungstag der Anmeldung:
29.07.87 Patentblatt 87/31

(45) Bekanntmachung des Hinweises auf die Patenterteilung:
24.05.89 Patentblatt 89/21

(84) Benannte Vertragsstaaten:
AT CH DE FR GB IT LI SE

(56) Entgegenhaltungen:
EP-C- 0 058 646
DE-A- 2 339 873
FR-A- 2 125 227
US-A- 2 998 737
US-A- 3 918 826
US-A- 4 447 177

(73) Patentinhaber: J. Kühn GmbH & Co. Präzisionswerkzeug KG, Köhler Strasse 41, D-4270 Dorsten 11 (DE)

(72) Erfinder: JOHNE, Frank, Hopener Strasse 24,
D-2842 Lohne (DE)

(74) Vertreter: Koscholke, Gotthold, Dr.-Ing., Rheinallee 147,
D-4000 Düsseldorf 11 (DE)

ACTORUM AG

## Beschreibung

### Technisches Gebiet

Die Erfindung bezieht sich auf ein Werkzeug nach dem Obergriff des Anspruchs 1.

### Stand der Technik

Ein solches Werkzeug ist aus Fig. 1 der US-PS 3 236 125 bekannt. Der Halter ist dabei unmittelbar mit der Befestigungsschraube in einer Ausnehmung einer Bohrstange festgelegt, wobei er mit einer hinteren Seitenkante an einer die Abstützung bildenden Fläche der Ausnehmung anliegt, während eine in den vorderen Teil des Halters eingeschraubte Abdrückschraube an einer entsprechenden Stelle der Fläche der Ausnehmung Widerlager findet. Wird der Halter durch die Abdrückschraube zur radialen Verstellung der Schneidplattenposition mehr oder weniger gebogen, so tritt zugleich auch eine Verschwenkung des Halters in seinem vorderen Teil und dadurch eine unerwünschte Änderung des sog. Einstellwinkels ein. Um diesen Nachteil zu beheben, wird in der US-PS 3 236 125 eine grundsätzlich andere Ausführung eines Werkzeughalters vorgeschlagen. Hierbei erfolgt keine elastische Verbiegung des Halters mehr, sondern es wird eine Änderung des Abstandes von einer Abstützfläche an der Bohrstange durch Verschieben eines in seinen Abmessungen etwa dem Halter entsprechenden Keilstückes bewirkt, wobei dieses und der Halter mit Bezug auf die Abstützfläche geneigte Flächen aufweisen. Die Längsverstellung des Kleilstückes geschieht mittels einer im Halter befindlichen Exzenteranordnung.

Die Einstellung dieses bekannten Halters geschieht mit Hilfe einer Spezialvorrichtung, wozu der Halter von der Bohrstange abgenommen werden muss. In der Betriebsposition an der Bohrstange kann eine Ein- oder Nachstellung nicht erfolgen, weil der Halter zusammen mit dem Keilstück an der Bohrstange festgeschraubt wird, so dass dann keine Realtivbewegung zwischen dem Halter und dem Keilstück mehr möglich ist.

### Darstellung der Erfindung

Aufgabe der Erfindung ist es, bestehende Unzulänglichkeiten und Nachteile zu überwinden und ein Werkzeug der eingangs genannten Art zu schaffen, das sowohl im montierten Zustand auf einer Bohrstange oder einem sonstigen Träger als auch im abgenommenen Zustand eine leichte radiale Verstellung der Schneidplatte gestattet, und zwar, ohne dass dabei der sog. Einstellwinkel (kappa) eine unzulässige Änderung erfährt. Das Werkzeug soll ferner einfach ausgebildet sein und sich insbesondere auch verhältnismässig klein bauen lassen, so dass es selbst unter beengten Platzverhältnissen eingesetzt werden kann, namentlich als Feinbohrelement. Mit alledem zusammenhängende weitere Probleme, mit denen sich die Erfindung befasst, ergeben sich aus der jeweiligen Erläuterung der aufgezeigten Lösung.

Gemäss der Erfindung kennzeichnet sich das Werkzeug durch die im Anspruch 1 angegebenen Merkmale.

Ein solches Werkzeug stellt eine kompakte kassettenartige Einheit dar. Seine Abmessungen lassen sich so wählen, dass es auch für beengte Einbauverhältnisse geeignet ist. Dabei ist ohne weiteres auch eine axiale Einstellbarkeit zu verwirklichen, wie sie vielfach notwendig ist. Bei alledem zeichnet sich das Werkzeug aber durch eine besonders vorteilhafte Einstellbarkeit in radialer Richtung aus, ohne dass dabei nicht erwünschte Beeinflussungen anderer Grössen, insbesondere des Einstellwinkels, eintreten. Dies ist durch die Ausbildung des Halters als parallele Biegefeder-Anordnung erreicht. Darunter ist jede Ausgestaltung zu verstehen, bei der unter Anwendung einer elastischen Biegung von Partien des Halters dessen Kopfteil, d. h. der die Schneidplatte tragende Teil, im wesentlichen eine Parallelverschiebung zu sich selbst erfährt.

Die Ausbildung lässt sich so treffen, dass der Halter im nicht ausgelenkten Zustand im wesentlichen unbelastet ist und eine elastische Rückstellkraft, die einer Auslenkung entgegenwirkt, erst entsteht, wenn die Verstellvorrichtung aus einer Null- oder Ausgangsposition heraus betätigt wird. Mit besonderem Vorteil wird aber der Halter bereits im nicht ausgelenkten Zustand schon unter Vorspannung am Basiskörper anliegend gehalten, so dass von vornherein eine Spielfreiheit gewährleistet ist. Dies lässt sich dadurch erreichen, dass der eine Feder bildende Halter während der Herstellung der festen Verbindung mit dem Basiskörper gegen diesen gedrückt wird, wodurch die gewünschte Vorspannung erzeugt wird, die nach bewirkter Verbindung bestehen bleibt.

Für die zu dieser Parallelfeder-Ausbildung vorgesehene Durchbrechung bestehen verschiedene Ausführungsmöglichkeiten. So kann die Durchbrechung im wesentlichen rechteckförmig sein, namentlich mit Ausnehmungen in den Eckbereichen. Bei einer sehr günstigen Ausführung hat die Durchbrechung im wesentlichen die Form eines «Z».

Die feste Verbindung des hinteren Endes des Halters mit dem Basiskörper wird besonders vorteilhaft durch eine oder mehrere Schweissstellen bewirkt. Es sind aber auch andere Verbindungsarten nicht ausgeschlossen.

Als Werkstoff für den Halter kommt jeder Stahl in Frage, der die erforderlichen Eigenschaften hat, um dem Halter die gewünschte Elastizität bzw. ein entsprechendes Federungsvermögen bei ausreichender Festigkeit zu verleihen. Als besonders vorteilhaft hat sich ein Stahl mit folgender Zusammensetzung erwiesen:

3,8 bis 5,1% Molybdän
17,8 bis 18,2% Nickel
7,3 bis 12,2% Cobalt
0,3 bis 1,8% Titan
bis maximal 0,05% Kohlenstoff
Rest Eisen mit den üblichen Stahlbeimengungen

Es kann dabei auch ein geringer Anteil an Aluminium vorhanden sein.

Die Verstellvorrichtung kann im einfachsten Fall lediglich aus einer Schraube bestehen, die in ein Gewinde des einen Teiles, vornehmlich des Halters, eingreift und sich am anderen Teil abstützt. Bei einer besonders zweckmässigen Ausführung weist die Verstellvorrichtung einen zwischen einer Druckfläche am Halter und einer Abstützfläche am Basiskörper befindlichen Keil und eine in ein Gewinde im Basiskörper eingreifende Stellschraube für den Keil auf. Der Keil hat vorzugsweise eine solche Neigung, dass keine Selbsthemmung eintreten kann. Dadurch kann der Keil beim Drehen der Schraube in Löserichtung vom Halter infolge der hohen Vorspannung desselben herausgedrückt, d. h. in Anlage am Schraubenkopf bleiben.

Weitere Einzelheiten und Vorteile der Erfindung ergeben sich aus der nachstehenden Erläuterung von Ausführungsbeispielen und aus der zugehörigen Zeichnung. Es zeigen:

Fig. 1 ein Werkzeug gemäss der Erfindung in einer Seitenansicht,

Fig. 2 eine Draufsicht auf das Werkzeug,

Fig. 3 einen Schnitt nach der Linie III-III in Fig. 1,

Fig. 4 einen Schnitt nach der Linie IV-IV in Fig. 1,

Fig. 5 einen Schnitt nach der Linie V-V- in Fig. 1,

Fig. 6 eine Draufsicht auf einen Halter vor dem Zusammenfügen mit dem Basiskörper, und

Fig. 7 einen Teil einer anderen Ausführung eines Halters in Draufsicht.

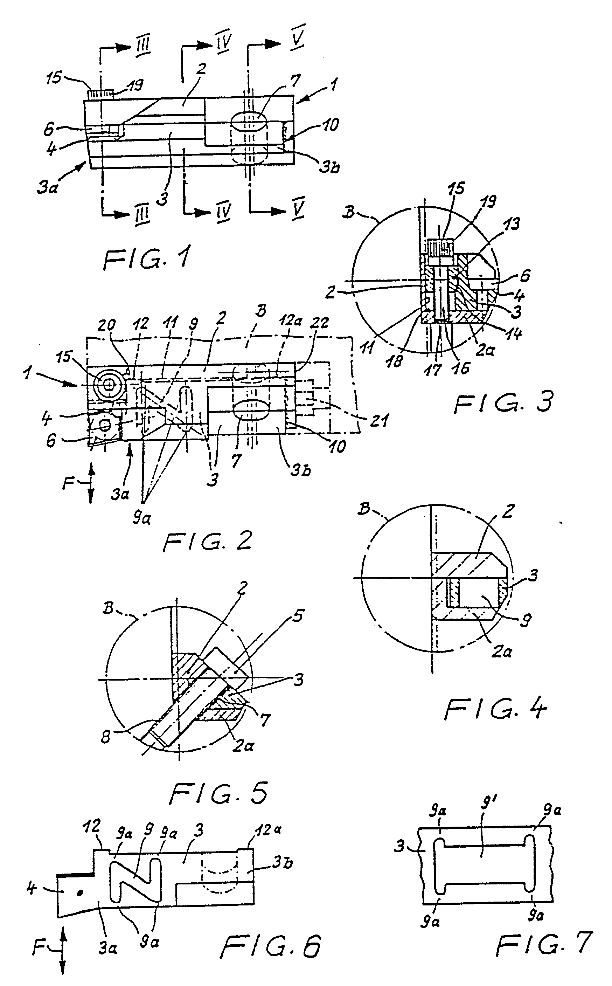

Das dargestellte Werkzeug besteht aus einem teilweise C-förmigen Basiskörper 2 und einem Halter 3, der in seinem vorderen Teil 3a eine Aufnahme 4 für eine Schneidplatte 6 aufweist. Die letztere kann durch eine Schraube oder eine andere geeignete Halte- oder Klemmeinrichtung auf dem Halter 3 befestigt werden. Der Basiskörper 2 bildet zusammen mit dem Halter 3 eine Einbaueinheit, die sich schnell und einfach auf einem Träger, etwa einer Bohrstange B, anbringen lässt. Dazu dient eine Befestigungsschraube 5 (Fig. 5), die ein vom Basiskörper 2 und dem Halter 3 gebildetes Langloch 7 durchgreift und in eine Gewindebohrung 8 der Bohrstange B eingeschraubt wird.

Der Halter 3 ist mit einer Durchbrechung 9 versehen, wobei die Ausbildung und Anordnung so getroffen ist, dass sich eine Parallel-Biegefeder-Anordnung ergibt. Dies bedeutet, dass sich der vordere Teil 3a des Halters 3 mit der Schneidplatten-Aufnahme 4 unter elastischer Verformung in Richtung des Pfeiles F parallel zu sich selbst verschiebt, wenn auf diesen vorderen Teil eine entsprechende Kraft wirkt, während das hintere Ende 3b des Halters 3 festgehalten wird.

Um dies zu gewährleisten, wird der Halter 3 an seinem hinteren Ende 3b nach dem Einfügen in den Basiskörper 2 mit diesem fest verschweisst. Die Schweissstelle ist in Fig. 1 und 2 mit der Ziffer 10 bezeichnet. Vorteilhaft wird der Halter 3 bei der Herstellung dieser Schweissverbindung oder einer anderen geeigneten festen Verbindung mit dem Basiskörper 2 mit einer gewissen Kraft an den Basiskörper 2 angedrückt, insbesondere derart, dass er mit zwei Abstand voneinander aufweisenden Stellen an einer Abstützfläche 11 des Basiskörpers 2 anliegt, wobei diese Stellen quer zur Längsrichtung des Halters um einen solchen Betrag versetzt sind, dass der Halter beim Andrücken bereits eine elastische Verformung erfährt. Dadurch ergibt sich eine Vorspannung, die nach Fertigstellung der Verbindung mit dem Basiskörper 2 erhalten bleibt.

Bei der gezeigten Ausführung werden die beiden Anlagestellen durch eine im Bereich des vorderen Teiles 3a des Halters 3 vorgesehene Nase 12 od. dgl. und einen kleinen Vorsprung 12a im Bereich des hinteren Endes 3b gebildet (vgl. Fig. 2 und 6). Der dazwischenliegende Bereich des Halters 3 bleibt ohne Berührung mit der Abstützfläche 11 des Basiskörpers 2. Ein hinterer Vorsprung 12a kann ggf. auch entfallen, so dass der Halter 3 an dieser Stelle mit seiner zurückspringenden Fläche am Basiskörper zu liegen kommt.

Das Langloch 7 für die Befestigungsschraube 5 geht bei der gezeigten Ausführung sowohl durch einen Teil des Halters 3 als auch durch einen Teil des Basiskörpers 2 hindurch und wird zweckmässig nach Herstellen der festen Verbindung zwischen dem Halter und dem Basiskörper durch Fräsen erzeugt.

Die zur Erzielung des Parallel-Feder-Verhaltens des Halters 3 dienende Durchbrechung 9 in diesem hat bei der in Fig. 2 und 6 dargestellten Ausführung die Form eines «Z», was sich als sehr vorteilhaft erwiesen hat. Die Bereiche 9a (Fig. 6) bilden dabei gewissermassen die Gelenke für die Parallelverschiebung. Die Durchbrechung kann aber auch anders ausgebildet sein, insbesondere im wesentlichen die Form eines Rechtecks 9' haben, wie aus Fig. 7 ersichtlich ist.

Um die Schneidplatte 6 in ihrer radialen Position einstellen zu können, d. h. in Richtung des Pfeiles F, ist dem vorderen Teil 3a des Halters 3 eine Verstellvorrichtung zugeordnet. Wie besonders Fig. 3 erkennen lässt, weist dieselbe einen Keil 13 auf, der einerseits an der Abstützfläche 11 des Basiskörpers 2 anliegt und andererseits mit einer Keilfläche 14 an einer entsprechend geneigten Druckfläche am Halter 3 anliegt. Auf den Keil 13 wirkt von oben der Kopf 15 einer Stellschraube 16, die in eine Gewindebohrung 17 im unteren Schenkel 2a des Basiskörpers 2 eingreift. Wird der Keil 13 mittels der Stellschraube 16 nach unten verschoben, so drückt er den Halter 3 entgegen der Vorspannkraft radial nach aussen. Wird die Stellschraube 16 in der anderen Richtung gedreht, gibt sie den Keil 13 in der entgegengesetzten Bewegungsrichtung frei. Der Keilwinkel ist so gewählt, dass keine Selbsthemmung eintritt. Der Keil 13 kann dann unter der hohen Vorspannkraft der Halters dem Kopf der Stellschraube auch beim Lösen derselben folgen, wobei sich der Halter 3 mit der Schneidplatte 6 radial nach innen bewegt. Infolge der Vorspannkraft des Halters ist bei jeder Einstellung bzw. Veränderung der Einstellung eine sichere Anlage aller Teile gewährleistet.

Der Anzugsweg des Keiles 13 ist durch einen Anschlag begrenzt, so dass eine Überbeanspruchung des Halters, d. h. eine zu hohe Biegebelastung infolge zu grosser Auslenkung desselben, verhindert wird. Bei der gezeigten Ausführung wird der Anschlag unmittelbar durch die Oberseite 18 des unteren Schenkels 2a des Basiskörpers 2 gebildet.

Am Kopf 15 der Stellschraube 16 ist eine Skalierung 19 (Fig. 1 und 3) und am Basiskörper 2 eine Bezugsmarke 20 vorgesehen, so dass die Grösse der Verstellung ablesbar ist.

Das Langloch 7 gestattet eine axiale Einstellung des Werkzeuges 1 relativ zu seinem Träger. Dazu kann, wie Fig. 2 zeigt, in bekannter Weise eine Verstellschraube 21 vorgesehen sein, die entweder in eine Gewindebohrung der Bohrstange B od. dgl. eingreift und mit ihrem Kopf die Anlage für eine hintere Stirnfläche 22 des Werkzeuges 1 bildet oder umgekehrt in eine Gewindebohrung des Werkzeuges eingeschraubt ist, wobei dann der Kopf an einer Stützfläche der Bohrstange B od. dgl. anliegt.

## Patentansprüche

1. Werkzeug für die spanabhebende Bearbeitung mit einem Halter (3), der in seinem vorderen Teil wenigstens eine Aufnahme (4) für eine Schneidplatte (6) und im Bereich zwischen seinen Enden ein Loch (7) zum Durchtritt einer Befestigungsschraube (5) aufweist, mit der er auf einem Träger, insbesondere einer Bohrstange (B) od. dgl., festlegbar ist, wobei der Halter in seinem die Schneidplatte tragenden Teil mittels einer Verstellvorrichtung (13-17) relativ zu einer Abstützung (11) elastisch auslenkbar ist, gekennzeichnet durch folgende Merkmale:
— der Halter (3) ist zusammen mit einem Basiskörper (2) als Einbaueinheit ausgebildet, wobei der Halter (3) im Bereich seines hinteren Endes (3b) fest mit dem Basiskörper (2) verbunden ist,
— der Halter (3) ist mit einer Durchbrechung (9) versehen und bildet eine Parallel-Biegefeder-Anordnung, derart, dass die Schneidplatte (6) während ihrer Verstellung im wesentlichen eine Parallelverschiebung in bezug auf die Schneidkanten enfährt,
— die Abstützung (11) für die Verstellvorrichtung (13-17) ist durch den Basiskörper (2) gebildet.

2. Werkzeug nach Anspruch 1, dadurch gekennzeichnet, dass der Halter (3) unter Vorspannung mit dem Basiskörper (2) verbunden ist.

3. Werkzeug nach einem der Ansprüche 1 und 2, dadurch gekennzeichnet, dass die Durchbrechung (9') im wesentlichen rechteckförmig ist.

4. Werkzeug nach einem der Ansprüche 1 und 2, dadurch gekennzeichnet, dass die Durchbrechung (9) im wesentlichen Z-förmig ist.

5. Werkzeug nach einem der Ansprüche 1 bis 4, dadurch gekennzeichnet, dass als feste Verbindung des Halters (3) mit dem Basiskörper (2) eine Schweissung (10) vorgesehen ist.

6. Werkzeug nach einem der Ansprüche 1 bis 5, dadurch gekennzeichnet, dass der Halter (3) aus einem Stahl folgender Zusammensetzung besteht:
3,8 bis 5,1% Molybdän
17,8 bis 18,2% Nickel
7,3 bis 12,2% Cobalt
0,3 bis 1,8% Titan
bis maximal 0,05% Kohlenstoff
Rest Eisen mit den üblichen Stahlbeimengungen

7. Werkzeug nach Anspruch 6, dadurch gekennzeichnet, dass der Stahl einen Anteil bis 0,3% Aluminium enthält.

8. Werkzeug nach einem der Ansprüche 1 bis 7, dadurch gekennzeichnet, dass die Verstellvorrichtung einen zwischen einer Druckfläche am Halter (3) und einer Abstützfläche (11) am Basiskörper (2) befindlichen Keil (13) und eine in eine Gewindebohrung (17) im Basiskörper (2) eingreifende Stellschraube (16) für den Keil (13) aufweist.

9. Werkzeug nach Anspruch 8, dadurch gekennzeichnet, dass die Keilfläche (14) auf der Seite des Halters (3) vorgesehen ist.

10. Werkzeug nach einem der Ansprüche 8 und 9, dadurch gekennzeichnet, dass der Keil (13) selbsthemmungsfrei ist.

11. Werkzeug nach einem der Ansprüche 8 bis 10, dadurch gekennzeichnet, dass der Anzugsweg des Keiles (13) durch einen Anschlag (18) begrenzt ist.

12. Werkzeug nach einem der Ansprüche 8 bis 11, dadurch gekennzeichnet, dass am Kopf (15) der Stellschraube (16) eine Skalierung (19) und am Basiskörper (2) eine Bezugsmarke (20) vorgesehen ist.

## Claims

1. A metal-cutting tool having a holder (3) the front part of which having at least one receiving means (4) for a cutting plate (6), and in the region between its ends the holder (3) having a hole (7) for penetration by a securing screw (5), by means of which the holder can be secured to a support, particularly to a boring bar (B) or the like, the holder (3) being resiliently deformable in its cutting plate bearing part relative to a support (11) by means of an adjustment device (13-17), characterised by the following features:
— the holder (3) is formed together with a base body (2) as a built-in unit, the holder (3) being rigidly connected in the region of the rear end (3b) thereof to the base body (2),
— the holder (3) is provided with a perforation (9) and forms a parallel-deflection-spring arrangement, in such a manner that the cutting plate (6) during the adjustment thereof undergoes essentially a parallel shift with reference to the cutting edges,
— the support (11) for the adjustment device (13-17) is formed by the base body (2).

2. A tool according to claim 1, characterised in that the holder (3) is connected to the base body (2) under initial stress.

3. A tool according to either of claims 1 and 2, characterised in that the perforation (9') is of substantially rectangular shape.

4. A tool according to either of claims 1 and 2, characterised in that the perforation (9) is substantially Z-shaped.

5. A tool according to any one of claims 1 to 4, characterised in that a weld (10) is provided as a rigid connection of the holder (3) to the base body (2).

6. A tool according to any one of claims 1 to 5, characterised in that the holder (3) is comprised of a steel with the following composition:

3.8 to   5.1% molybdenum
17.8 to 18.2% nickel
7.3 to 12.2% cobalt
0.3 to   1.8% titanium
up to a maximum of 0.05% carbon
the rest is iron with the usual steel additions

7. A tool according to claim 6, characterised in that the steel contains up to 0.3% aluminium.

8. A tool according to any one of claims 1 to 7, characterised in that the adjustment device has a wedge located between a pressure face on the holder (3) and a support face (11) on the base body (2) and an adjustment screw (16) for the wedge, the screw engaging in a tapped hole (17) in the base body (2).

9. A tool according to claim 8, characterised in that the wedge surface (14) is provided on the side of the holder (3).

10. A tool according to any one of claims 8 and 9, characterised in that the wedge (13) is free from self-locking.

11. A tool according to any one of claims 8 to 10, characterised in that the tightening path of the wedge (13) is limited by a stop (18).

12. A tool according to any one of claims 8 to 11, characterised in that graduations (19) are provided on the head of the adjustment screw (16) and that a reference mark (20) is provided on the base body (2).

**Revendications**

1. Outil d'usinage par enlèvement de copeaux, comportant un porte-pièce (3) muni, à sa partie avant, d'au moins un logement (4) pour recevoir une plaquette de coupe (6) et, entre ses extrémités, d'un trou (7) pour le passage d'une vis de fixation (5), par laquelle il peut être fixé à un support, en particulier à une tige porte-foret (B) ou analogue, le porte-pièce, dans sa partie qui porte la plaquette de coupe, étant agencé de manière à pouvoir être dévié élastiquement par rapport à un appui (11), au moyen d'un dispositif de réglage (13-17), caractérisé par les particularités suivantes:
— le porte-pièce (3) est, avec une base (2), agencé en un ensemble encastré, le porte-pièce (3) étant fixé à la base (2) par son extrémité arrière (3b),
— le porte-pièce (3) est muni d'une ouverture (9) et forme un agencement à ressorts de flexion parallèles, de telle façon que, lors de son réglage, la plaquette de coupe (6) subisse essentiellement un déplacement parallèle aux arêtes coupantes,
— l'appui (11) pour le dispositif de réglage (13-17) est formé par la base (2).

2. Outil selon la revendication 1, caractérisé en ce que le porte-pièce (3) est relié sous précontrainte à la base (2).

3. Outil selon l'une des revendications 1 et 2, caractérisé en ce que l'ouverture (9') est rectangulaire en substance.

4. Outil selon l'une des revendications 1 et 2, caractérisé en ce que l'ouverture (9) a la forme d'un Z, en substance.

5. Outil selon l'une des revendications 1 à 4, caractérisé en ce que la fixation du porte-pièce (3) à la base (2) est réalisée par une soudure (10).

6. Outil selon l'une des revendications 1 à 5, caractérisé en ce que le porte-pièce (3) est fait d'un acier dont la composition est la suivante:

3,8 à   5,1% de molybdène,
17,8 à 18,2% de nickel,
7,3 à 12,2% de cobalt,
0,3 à   1,8% de titane,
jusqu'à 0,05% au maximum de carbone,
le reste étant du fer avec les additifs habituels.

7. Outil selon la revendication 6, caractérisé en ce que l'acier contient jusqu'à 0,3% d'aluminium.

8. Outil selon l'une des revendications 1 à 7, caractérisé en ce que le dispositif de réglage comporte un coin (13), qui se trouve entre une face de pression du porte-pièce (3) et une face d'appui (11) de la base (2), et une vis de calage (16), destinée au coin (13), qui est en prise dans un trou fileté (17) ménagé dans la base (2).

9. Outil selon la revendication 8, caractérisé en ce que la surface en coin (14) est prévue sur le côté du porte-pièce (3).

10. Outil selon l'une des revendications 8 et 9, caractérisé en ce que le coin (13) n'est pas autobloquant.

11. Outil selon l'une des revendications 8 à 10, caractérisé en ce que la course du coin (13) est limitée par une butée (18).

12. Outil selon l'une des revendications 8 à 11, caractérisé en ce qu'une graduation (19) est prévue sur la tête (15) de la vis de calage (16) et un repère sur la base (2).

FIG. 1

FIG. 2

FIG. 3

FIG. 4

FIG. 5

FIG. 6

FIG. 7

7